# EUROPEAN PATENT SPECIFICATION

(11) **EP 3 315 698 B1**
(45) Date of publication and mention of the grant of the patent: **22.04.2020**
(21) Application number: 17190348.7
(22) Date of filing: 11.09.2017
(51) Int. Cl.: E05B 81/20, E05B 79/20, E05B 77/38, F16C 1/10, F16C 1/26

(54) **DOOR APPARATUS FOR VEHICLE**
TÜRVORRICHTUNG FÜR FAHRZEUG
APPAREIL DE PORTE POUR VÉHICULE

(30) Priority: 26.10.2016 JP 2016209830
(43) Date of publication of application: 02.05.2018
(73) Proprietor: AISIN SEIKI KABUSHIKI KAISHA, Kariya-shi Aichi 448-8650 (JP)
(72) Inventor: KUWABARA, Takeshi, Kariya-shi,, Aichi 448-8650 (JP); KONOMOTO, Norio, Kariya-shi,, Aichi 448-8650 (JP); SHIMIZU, Kimito, Kariya-shi,, Aichi 448-8650 (JP)
(74) Representative: TBK

(56) References cited:
- JP-A- 2004 244 892
- JP-U- S57 115 421
- JP-U- S59 142 508
- JP-Y1- S4 942 507
- US-A- 5 579 663

## Description

### TECHNICAL FIELD

This invention relates to a door apparatus for a vehicle.

### BACKGROUND DISCUSSION

JP 4362754 B2 discloses a door apparatus for a vehicle capable of opening and closing an opening portion formed on a side surface of a vehicle body.

The door apparatus for a vehicle includes a door body and a closure device provided inside the door body.

The closure device integrally includes a lock unit, an actuator unit, and a cable unit.

The lock unit includes a latch (hook) which can be detached from a striker provided on the vehicle body, and a pole which can be detached from the latch.

The latch can be rotated around its own rotation shaft between a full-latch position which can be engaged with the striker and an unlatch position which can be disengaged from the striker. Furthermore, the latch can be positioned at a half-latch position between the full-latch position and the unlatch position.

The pole can be rotated around its own rotation shaft between an engagement position at which the latch is held at these positions by engaging with the latch positioned at the full-latch position or the half-latch position and a non-engagement position not engaged with the latch.

Furthermore, the lock unit includes latch position detecting means, a forcibly rotating member (operating lever), biasing means, and a lock housing that accommodates these members.

The latch position detecting means can detect a rotation position of the latch. That is, when the latch is positioned at any one of the full-latch position, the unlatch position, and the half-latch position, the latch position detecting means detects the rotation position of the latch.

In addition, the forcibly rotating member can be rotated around its own rotation shaft between an initial position and a forced rotation position. When the forcibly rotating member is positioned at the initial position, the forcibly rotating member is not engaged with the latch. Meanwhile, when the forcibly rotating member rotates to the forced rotation position, the forcibly rotating member is engaged with the latch such that the latch is forcibly rotated to the full-latch position.

The biasing means rotatably biases the forcibly rotating member toward the initial position. Therefore, when a force other than a biasing force of the biasing means is not applied to the forcibly rotating member, the forcibly rotating member is positioned at the initial position.

The actuator unit includes an electric motor (actuator), a power transmission mechanism connected to the motor, and an actuator housing that accommodates a part of the motor and a part of the power transmission mechanism.

The cable unit includes an outer tube having flexibility, each of a pair of caps fixed to both end portions of the outer tube, and an inner cable having flexibility.

The pair of caps is an annular member.

The inner cable penetrates inside the outer tube and the pair of caps to be relatively movable.

Each of the caps of the cable unit is supported by the lock housing and the actuator housing.

One end portion of the inner cable of the cable unit is connected to the power transmission mechanism of the actuator unit, and the other end portion thereof is connected to the forcibly rotating member.

If the door apparatus for a vehicle rotates in a direction from a fully opened position in which the opening portion of the vehicle body is opened to a fully closed position in which the opening portion is fully closed, when the door apparatus for a vehicle reaches a position near the fully closed position, the latch which has positioned at the unlatch position rotates to the half-latch position while engaging with the striker.

When the latch position detecting means detects that the latch is positioned at the half-latch position, a control device connected to the latch position detecting means transmits a rotation signal to the motor. Then, the motor rotates in one direction, and the rotational force of the motor is transmitted to the inner cable through the power transmission mechanism. As a result, since the inner cable is drawn to a side of the motor, the forcibly rotating member which was previously positioned at the initial position rotates to the forced rotation position against the biasing force of the biasing means. Therefore, the latch positioned at the half-latch position is forcibly rotated to the full-latch position by the forcibly rotating member. Then, since the door apparatus for a vehicle rotates to the fully closed position, the opening portion of the vehicle body is fully closed by the door apparatus for a vehicle.

Furthermore, when the latch position detecting means detects that the latch reaches the full-latch position, the control device transmits a stop signal to the motor. Then, since the rotational force of the motor does not reach the forcibly rotating member, the forcibly rotating member positioned at the forced rotation position returns to the initial position by the biasing force of the biasing means.

Other examples of the related art include JP 2007-138533 A, US 5 579 663 A, JP S59 142508 U, JP S49 42507 Y1 and JP S57 115421 U.

A cap of a lock unit side of a cable unit is supported by a lock housing. More specifically, the cap is supported by a pair of brackets that configures a part of a lock housing and is opposed to each other while forming a gap.

One bracket includes a cut and raised piece. A U-shaped groove is formed in the cut and raised piece.

A small diameter portion having a circular cross section, which has a diameter smaller than an adjacent portion, is formed on an intermediate portion of the cap in the lock unit side of the cable unit in a longitudinal direction. The small diameter portion is fitted in the U-shaped groove of the cut and raised piece.

The other bracket faces the cap from an open end portion side of the U-shaped groove, and thus falling out of the cap from the U-shaped groove is restricted.

However, in order to make a small diameter portion of the cap fit into the U-shaped groove of the cut and raised piece, it is necessary to make an outer diameter of the small diameter portion smaller (slightly) than a width of the U-shaped groove.

However, if the small diameter portion of the cap has such a dimension, when the cap is supported by the cut and raised piece (U-shaped groove), the cap can move in a width direction of, for example, the U-shaped groove.

Therefore, when a rotational force of a motor reaches an inner cable, there is a possibility that a portion positioned closer to a forcibly rotating member side than a small diameter portion of the cable unit is shaken around a small diameter portion (U-shaped groove). In other words, a portion positioned between the cap of the inner cable and the forcibly rotating member is shaken and collides with a member (for example, pair of brackets) positioned in the periphery. Then, there is a possibility that abnormal noise between the inner cable and the member occurs, and the inner cable and/or the member may be damaged.

Thus, a need exists for a door apparatus for a vehicle which can suppress that the inner cable of the cable unit collides with an actuator unit when a driving force of an actuator is transmitted to a driven body through the cable unit.

### SUMMARY OF THE INVENTION

It is the object of the invention to provide a door apparatus for a vehicle which provides an improved structure to suppress collision of internal elements of the door apparatus during its operation.

The object of the invention is achieved by a door apparatus for a vehicle having the features of claim 1.

Further advantageous developments of the present invention are defined in the dependent claims.

An aspect of this invention is directed to a door apparatus for a vehicle including: an actuator unit including an actuator that generates a driving force for driving a vehicle door for opening or closing an opening portion formed in a vehicle body by relatively moving to the vehicle body or for driving a driven body that is a locking device which is built in the vehicle door and is configured to hold a state where the vehicle door closes the opening portion, and an actuator housing that accommodates at least a part of the actuator; and a cable unit that, in use, connects the driven body and the actuator unit to each other, and transmits a driving force of the actuator to the driven body, in which the cable unit includes a flexible outer tube, an annular member fixed to one end of the outer tube and including a supported portion which is supported to be relatively movable by a supporting portion of the actuator housing outside the outer tube, and a flexible inner cable that penetrates inside the outer tube and the annular member to be relatively movable, and has one end protruding from the annular member to outside to which the driving force of the actuator is applied and the other end which, in use, is connected to the driven body, the supporting portion includes a pair of suppressing portions opposed to each other while forming a gap, and the annular member includes a damper which is positioned between the supported portion and the actuator, and is in contact with respective opposing surfaces of the pair of suppressing portions.

In the aspect of the invention, the supported portion of the annular member fixed to one end of the outer tube is supported so as to be relatively movable by a supporting portion of the actuator housing.

However, the annular member includes the damper that is positioned between the supported portion and the actuator, and is in contact with opposing surfaces of a pair of suppressing portions.

Therefore, when the driving force of the actuator is transmitted to the driven body through the cable unit, collision of the inner cable (portion positioned closer to actuator side than annular member of) being shaken with the actuator unit is suppressed by the damper and the pair of suppressing portions.

Preferably, the actuator housing may include a housing body in which at least a part of the actuator is accommodated, a first bracket that includes two fixing portions that are fixed to an outer surface of the housing body and separated from each other, the supporting portion that positions the other fixing portion of the two fixing portions between the supporting portion and the one fixing portion of the two fixing portions, and the one suppressing portion of the pair of suppressing portions, and a second bracket that is fixed to the first bracket and includes the supporting portion and the other suppressing portion of the pair of suppressing portions.

The supporting portion of the first bracket of the actuator housing is a portion for supporting the supported portion of the annular member of the cable unit. Therefore, when the driving force of the actuator is transmitted to the driven body through the cable unit, in a case where the inner cable is greatly shaken, a large force is applied to the supporting portion of the first bracket. Therefore, in this case, it is necessary to increase the mechanical strength of the supporting portion.

For example, if the supporting portion is positioned between one fixing portion of the first bracket and the other fixing portion, the mechanical strength of the supporting portion of the first bracket increases.

However, in this case, it is necessary to position the other fixing portion on a side opposite to one fixing portion by interposing the supporting portion of the first bracket therebetween. That is, a distance between the one fixing portion and the other fixing portion becomes large. In other words, a size of the actuator housing becomes large (in direction of straight line connecting a pair of fixing portions to each other).

On the other hand, as described above, when the driving force of the actuator is transmitted to the driven body through the cable unit, shaking that greatly occurs in the inner cable is suppressed by the damper and a pair of suppressing portions. Accordingly, it is unnecessary to increase the mechanical strength of the supporting portion of the first bracket. Therefore, it is possible to decrease a size of the actuator housing by positioning the other fixing portion between the supporting portion of the first bracket of the actuator housing and the one fixing portion.

Preferably, the driven body may be the locking device including a latch which is engaged or disengaged with or from a striker provided in the vehicle body, and a forcibly rotating member that is configured to hold the vehicle door in a state where the opening portion is closed by forcibly rotating the latch engaged with the striker to a full-latch position, when the latch is positioned at a half-latch position while engaging with the striker, the actuator may generate a driving force for driving the forcibly rotating member, and the inner cable in which the other end is connected to the forcibly rotating member may transmit the driving force generated by the actuator to the forcibly rotating member so as to rotate the latch to the full-latch position.

According to this preferred configuration, the locking device becomes a so-called closure device.

Generally, since the actuator of the closure device generates a large driving force, when the actuator is driven, a large force is transmitted to the inner cable.

However, it is possible to suppress great shaking of the inner cable when the driving force of the actuator is transmitted to the forcibly rotating member through the cable unit, by the damper and the pair of suppressing portions.

### BRIEF DESCRIPTION OF THE DRAWINGS

The foregoing, additional features, effects and advantages of this invention will become more apparent from the following detailed description considered with the reference to the accompanying drawings, wherein:
Fig. 1 is a side view of a door apparatus for a vehicle viewed from a vehicle outer side according to an embodiment of this invention;
Fig. 2 is a sectional view taken along a solid line II-II of Fig. 1;
Fig. 3 is a side view of a closure device viewed from the vehicle outer side;
Fig. 4 is a sectional view taken along a solid line IV-IV of Fig. 3 at the time of positioning a latch at a half-latch position;
Fig. 5 is a sectional view corresponding to Fig. 4 at the time of a forward rotation of a motor;
Fig. 6 is an exploded perspective view of an actuator unit;
Fig. 7 is a sectional view taken along a solid line VII-VII of Fig. 3;
Fig. 8 is a sectional view taken along a solid line VIII-VIII of Fig. 3; and
Fig. 9 is a sectional view taken along a solid line IX-IX of Fig. 3.

### DETAILED DESCRIPTION

Hereinafter, an embodiment disclosed here will be explained with reference to the drawings.

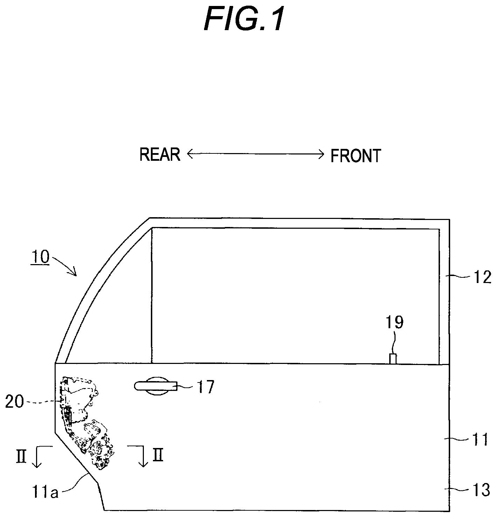

A door apparatus for a vehicle 10 illustrated in Fig. 1 is a side door of a right side of the vehicle, and a front end portion thereof is rotatably supported around a rotation shaft of a vehicle body (not shown) in an up and down direction. That is, the door apparatus for a vehicle 10 is a swing type real door. The door apparatus for a vehicle 10 can be rotated with respect to the vehicle body in a horizontal direction between a fully opened position in which an opening portion formed at a side surface of the vehicle body is fully opened and a fully closed position in which the opening portion is closed. A "front-rear direction" and a "right-left direction (vehicle inside and outside direction)" relating to the door apparatus for a vehicle 10 in the following description are directions as a reference based on a case where the door apparatus for a vehicle 10 is positioned at the fully closed position.

The door apparatus for a vehicle 10 includes a door body 11 configuring a lower half portion thereof and a door sash 12 provided in an upper half portion. The door body 11 includes an outer panel 13 configuring an outer side surface of the door body 11, an inner panel 14 fixed to front and rear both edge portions and a lower edge portion of an inner side surface of the outer panel 13, and a resin trim (not shown) fixed to an inner side surface of the inner panel 14 and configuring an inner side surface of the door body 11.

As illustrated in Fig. 1, a lower portion of a rear end portion of the door body 11 (outer panel 13 and inner panel 14) is cut in an approximately inclined direction to avoid a rear wheel (not shown). That is, the lower portion of the rear end portion of the door body 11 is configured with the rear tire avoiding portion 11a.

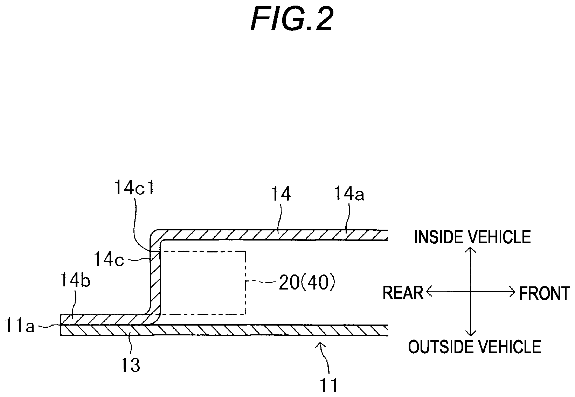

As illustrated in Fig. 2, a portion excluding the front and rear both edge portions and the lower edge portion of the inner panel 14 is configured with a panel body 14a approximately in parallel with the outer panel 13 and separated from the outer panel 13. In addition, the front and rear both edge portions and the lower edge portion of the inner panel 14 are configured with a peripheral edge portion 14b fixed to the front and rear both edge portions and the lower edge portion of an inner side surface of the outer panel 13. Furthermore, on a rear portion of the inner panel 14, a rear end wall portion 14c which is approximately orthogonal to the panel body 14a and the peripheral edge portion 14b and connected to a rear end portion of the panel body 14a and a rear end portion of the peripheral edge portion 14b is formed. A side surface shape of the rear end wall portion 14c is a shape formed along the rear tire avoiding portion 11a. That is, a portion corresponding to the rear tire avoiding portion 11a of the rear end wall portion 14c is configured with a rear tire avoiding portion 14c1.

As illustrated in Fig. 1, an outside handle 17 is rotatably supported on the outer panel 13. The outside handle 17 can be rotated between an initial position and a latch release position and is rotatably biased toward the initial position by handle biasing means (not shown).

Furthermore, a lock knob 19 is slidably provided in the up and down direction on an upper end portion of the trim. The lock knob 19 can be slid with respect to the trim between an unlocked position (see Fig. 1) and a locked position (not shown) positioned lower than the unlocked position.

A closure device 20 that is positioned between the outer panel 13 and the inner panel 14 and exposes a part thereof in the rear end wall portion 14c of the inner panel 14 is provided inside the door apparatus for a vehicle 10.

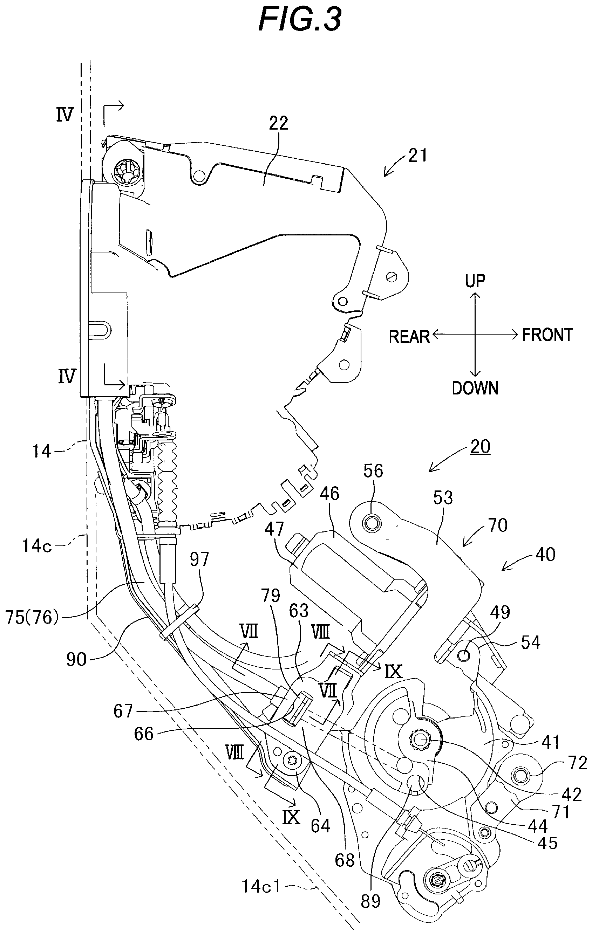

As illustrated in Fig. 3 to Fig. 9, the closure device 20 includes integrally a lock unit 21, an actuator unit 40, a cable unit 75, and a connection member 90.

As illustrated in Fig. 3 to Fig. 5, the lock unit 21 includes a lock housing 22, a rotation shaft 23, a latch 24, a rotation shaft 30, a pole 31, a rotation shaft 33, and a forcibly rotating member 34, as main components.

The lock housing 22 accommodates the rotation shaft 23, the latch 24, the rotation shaft 30, the pole 31, the rotation shaft 33, and the forcibly rotating member 34. Furthermore, a vehicle inner side end surface of a rear end portion of the lock housing 22 and a lower surface of the rear end portion are opened.

The latch 24 includes a striker engagement groove 25. Furthermore, an engagement projection portion at full latch 26, an engagement projection portion at half latch 27, and a pressed portion 28 are projected on an outer peripheral portion of the latch 24.

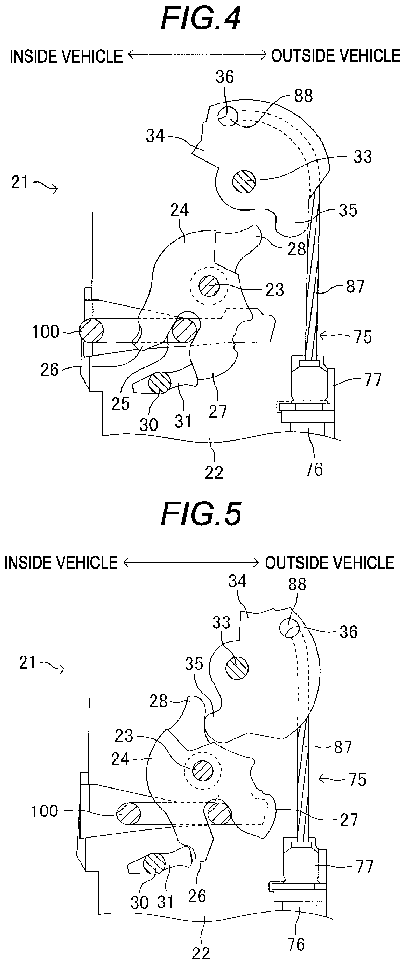

The latch 24 can be rotated around the rotation shaft 23 fixed to an inner wall of the lock housing 22 between an unlatch position (not shown) where a striker 100 fixed to the vehicle body and the striker engagement groove 25 are not engaged with each other, and a full-latch position (see Fig. 5) where the striker engagement groove 25 is engaged with the striker 100 and the door apparatus for a vehicle 10 is held at the fully closed position. Furthermore, the latch 24 can be moved to the half-latch position (see Fig. 4) between the unlatch position and the full-latch position.

Furthermore, latch position detecting means (not shown) for detecting a rotation position of the latch 24 is provided inside the lock housing 22. The latch position detecting means can detect the rotation position of the latch 24. That is, when the latch 24 is positioned at any one of the full-latch position, the unlatch position, and the half-latch position, the latch position detecting means detects the rotation position of the latch 24.

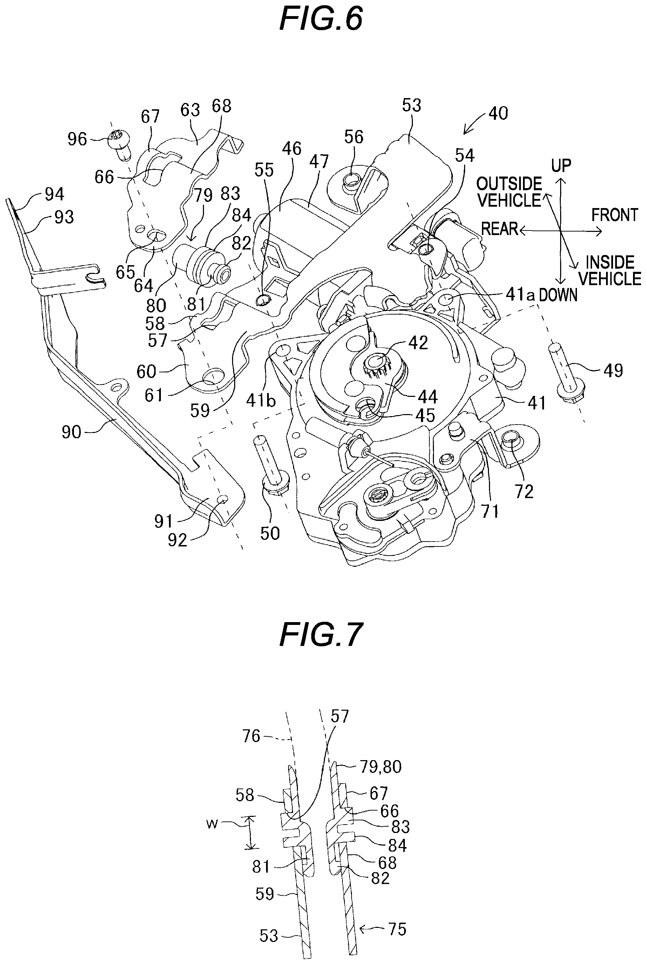

The pole 31 positioned below the latch 24 can be rotated around the rotation shaft 30 fixed to the inner wall of the lock housing 22. The pole 31 can be rotated between an engagement position (see Fig. 5 and Fig. 6) where the latch 24 is held at these positions by engaging with the latch 24 positioned at the full-latch position or the half-latch position and a non-engagement position (not shown) separated from the latch 24.

Furthermore, biasing means (not shown, for example, tension spring) is mounted in the latch 24 and the pole 31. Accordingly, by a biasing force of the biasing means, the latch 24 is rotatably biased to an unlatch position side and the pole 31 is rotatably biased to an engagement position side, at any times.

Furthermore, a lock unit 21 includes a lift lever (not shown) positioned inside the lock housing 22 and rotating around the rotation shaft 30 together with the pole 31.

Furthermore, the lift lever and the outside handle 17 are interconnected through a well-known linking mechanism (not shown).

When the door apparatus for a vehicle 10 rotates from a fully opened position side to a position near the fully closed position, the latch 24 (striker engagement groove 25) positioned at the unlatch position rotates to the half-latch position against the biasing force of the biasing means while engaging with the striker 100. Then, since the pole 31 is positioned at the engagement position by the biasing force of the biasing means and engaged with the engagement projection portion at half latch 27 of the latch 24, the lock unit 21 becomes a "half-latch state" illustrated in Fig. 4.

Furthermore, when the latch 24 (striker engagement groove 25) rotates to the full-latch position and the door apparatus for a vehicle 10 rotates to the fully closed position while engaging with the striker 100 against the biasing force of the biasing means, the pole 31 is positioned at the engagement position and engaged with the engagement projection portion at full latch 26 of the latch 24 by the biasing force of the biasing means. As a result, the lock unit 21 becomes a "full-latch state" illustrated in Fig. 5.

Meanwhile, when the pole 31 rotates to a non-engagement position side and the door apparatus for a vehicle 10 rotates to the fully opened position side against the biasing force of the biasing means, the latch 24 (striker engagement groove 25) rotates to the unlatch position side while releasing the striker 100. Therefore, the lock unit 21 becomes an "unlatch state" where the latch 24 releases the striker 100.

The forcibly rotating member 34 includes a pressing portion 35 and a cable locking hole 36. Furthermore, the forcibly rotating member 34 can be rotated between the initial position illustrated in Fig. 4 and a forced rotation position illustrated in Fig. 5 around the rotation shaft 33 fixed to the inner wall of the lock housing 22.

When the forcibly rotating member 34 is positioned at the initial position, the pressing portion 35 of the forcibly rotating member 34 is not engaged with the pressed portion 28 of the latch 24. Meanwhile, when the forcibly rotating member 34 rotates to the forced rotation position, the pressing portion 35 of the forcibly rotating member 34 is engaged with the pressed portion 28, and forcibly rotates the latch 24 until the latch 24 reaches the full-latch position.

Furthermore, the lock unit 21 includes a return spring (not shown) for rotatably biasing the forcibly rotating member 34 toward the initial position. Therefore, when a force other than the biasing force of the return spring is not applied to the forcibly rotating member 34, the forcibly rotating member 34 is positioned at the initial position.

The lock housing 22 of the lock unit 21 is fixed to the inner panel 14 through a fixing portion (not shown).

The actuator unit 40 illustrated in Fig. 3 and Fig. 6 to Fig. 9 includes a housing body 41, a rotation shaft 42, a rotary lever 44, a motor 46, a first bracket 53, a second bracket 63, and a third bracket 71, as main components.

The resin housing body 41 is a hollow member.

A through-hole (not shown) is formed approximately in a central portion of a vehicle outer side surface of the housing body 41. The rotation shaft 42 whose axis extends in a vehicle width direction is approximately disposed in a central portion inside the housing body 41. A vehicle outer side end portion of the rotation shaft 42 passes through the through-hole and is positioned on a vehicle outer side of the housing body 41. The rotation shaft 42 can be relatively rotated around its own axis with respect to the housing body 41.

A gear mechanism (not shown) configured by a plurality of gear members is disposed inside the housing body 41. The gear mechanism includes a worm wheel (not shown). Furthermore, a part of the rotation shaft 42 is connected to the gear mechanism inside the housing body 41.

Furthermore, bolt insertion holes 41a and 41b are formed as through-holes at two places of the housing body 41.

As illustrated in Fig. 3 and Fig. 6, the rotary lever 44, which is opposed to the vehicle outer side surface of the housing body 41 and has an approximately fan shape, is fixed to a vehicle outer side end portion of the rotation shaft 42. Therefore, the rotary lever 44 can be rotated together with the rotation shaft 42. Specifically, the rotary lever 44 can be rotated between the initial position illustrated in Fig. 3 and Fig. 6 and the forced rotation position (not shown) rotated counterclockwise from the initial position by a predetermined angle.

As illustrated in Fig. 3 and Fig. 6, the main body 47 of the electric motor 46 is fixed to an upper portion of the housing body 41.

The motor 46 includes a rotary output shaft (not shown). The rotation output shaft is projected to an outer side of (front obliquely downward) of the main body 47 from an end surface (lower end surface) of a housing body 41 side of the main body 47.

Furthermore, a worm (not shown) is fixed to a portion projected from the main body 47 of the rotation output shaft to an outer side.

An end portion of the housing body 41 side in the main body 47 of the motor 46, a portion projected from the main body 47 of the rotation output shaft to an outside, and a worm are arranged inside the housing body 41. Furthermore, the worm is engaged with the worm wheel inside the housing body 41.

The motor 46 (rotation output shaft) can be forwardly and reversely rotated.

When the motor 46 forwardly rotates, this rotational force is transmitted to the gear mechanism including the worm and the worm wheel, and further transmitted from the gear mechanism to the rotation shaft 42. Therefore, the rotary lever 44 integrated with the rotation shaft 42 rotates from the initial position to the forced rotation position.

Meanwhile, when the motor 46 reversely rotates, the rotary lever 44 rotates from the forced rotation position to the initial position.

The first bracket 53, which is an integrally molded product made of a metal illustrated in Fig. 3 and Fig. 6 to Fig. 9, is in contact with the vehicle outer side surface of the housing body 41 from a vehicle outer side.

A female screw hole 54 and a female screw hole 55 are respectively formed at two separated places of the first bracket 53. Accordingly, bolts 49 and 50 passing through a bolt insertion hole 41a and a bolt insertion hole 41b from the vehicle inner side of the housing body 41 are respectively screwed into the female screw holes 54 and 55 such that the first bracket 53 is fixed to the housing body 41. That is, the first bracket 53 is fixed to the housing body 41 at two places of the female screw hole 54 and the female screw hole 55.

In addition, a female screw hole 56 is formed on an upper end portion of the first bracket 53.

Furthermore, a substantially rectangular support hole 57 positioned on the rear side (below) of the female screw hole 55 is formed in the first bracket 53. As illustrated in Fig. 7, a dimension (dimension in axial direction of outer tube 76 described below) of the support hole 57 in a lateral direction is W.

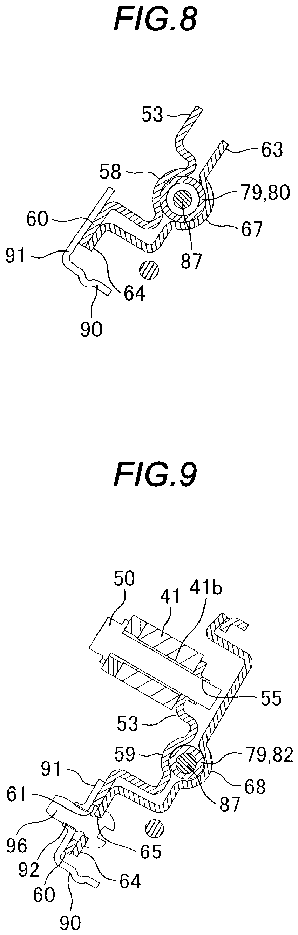

Furthermore, a first clamping portion 58 and a first suppressing portion 59 positioned at both sides of the support hole 57 are formed in the first bracket 53. As illustrated in Fig. 8 and Fig. 9, sectional shapes of the first clamping portion 58 and the first suppressing portion 59 are both approximately arc shapes. The first clamping portion 58 and the first suppressing portion 59 are on the same axis. In other words, the curvature center of the first clamping portion 58 (arc shape) and the curvature center of the first suppressing portion 59 (arc shape) are positioned on one straight line approximately parallel to the axial line of the outer tube 76 described below. However, the curvature of the first clamping portion 58 is smaller than the curvature of the first suppressing portion 59.

Furthermore, a flat plate fixing portion 60 is formed on a rear end portion (lower end portion) of the first bracket 53, and a bolt insertion hole 61 as a through-hole is formed in the fixing portion 60.

The second bracket 63 which is an integrally molded product made of a metal is in contact with a vehicle outer side surface of the first bracket 53 from the vehicle outer side.

A rear end portion (lower end portion) of the second bracket 63 is configured with a flat plate fixed portion 64. Furthermore, a bolt insertion hole 65 as a through-hole is formed in the fixed portion 64.

A support hole 66 having an approximately rectangular shape in a side view is formed at a central portion of the second bracket 63 in a longitudinal direction. A shape of the support hole 66 is approximately the same as that of the support hole 57. That is, as illustrated in Fig. 7, the dimension of the support hole 66 in the longitudinal direction is approximately the same as that of W. Furthermore, a second clamping portion 67 and a second suppressing portion 68 are positioned at both sides of the support hole 66 in the second bracket 63. As illustrated in Fig. 8 and Fig. 9, sectional shapes of the second clamping portion 67 and the second suppressing portion 68 are both approximately arc shapes. The second clamping portion 67 and the second suppressing portion 68 are on the same axis. However, the curvature of the second clamping portion 67 is smaller than the curvature of the second suppressing portion 68. Furthermore, the curvature of the second clamping portion 67 is approximately the same as the curvature of the first clamping portion 58, and the curvature of the second suppressing portion 68 is approximately the same as the curvature of the first suppressing portion 59.

The third bracket 71 which is an integrally molded product made of a metal is fixed to a front end portion (lower end portion) of the housing body 41. A female screw hole 72 is formed in the third bracket 71.

The housing body 41, the first bracket 53 and the second bracket 63, and the third bracket 71 are components of an actuator housing 70.

Bolts (not shown) respectively inserted into two through-holes (not shown) of the inner panel 14 from the vehicle inner side are screwed with the female screw hole 56 of the first bracket 53 and the female screw hole 72 of the third bracket 71 such that the actuator unit 40 is fixed to the inner panel 14.

The cable unit 75 includes the outer tube 76, an upper cap 77, a lower cap 79, an inner cable 87, a locking portion 88, and a locking portion 89.

The outer tube 76 of an elongated shape is an integrally molded product made of resin and having the flexibility.

As illustrated in Fig. 4 and Fig. 5, the upper cap 77 which is an integrally molded product made of a metal is fixed to an upper end of the outer tube 76.

The upper cap 77 is a rotationally symmetric body (annular member) with its center axis as the center. A part of the upper cap 77 is inserted into the opening portion of an upper end side of the outer tube 76 and fixed to the outer tube 76.

As illustrated in Fig. 3 and Fig. 6 to Fig. 9, the lower cap 79 which is an integrally molded product made of a metal is fixed to a lower end of the outer tube 76. The lower cap 79 is a rotationally symmetric body (annular member) with its center axis as the center.

Both end portions of the lower cap 79 are configured with a large diameter cylindrical portion 80 and a small diameter cylindrical portion 81 which are in the same axis. The outer diameter of the large diameter cylindrical portion 80 is greater than that of the small diameter cylindrical portion 81. In addition, the curvature of an outer peripheral surface of the large diameter cylindrical portion 80 is approximately the same as the curvature of an inner surface (opposing surfaces of both) of the first clamping portion 58 and the second clamping portion 67. As illustrated in Fig. 7, a lower end portion of the outer tube 76 is inserted inside the large diameter cylindrical portion 80 and a lower end portion of the outer tube 76 is fixed to the large diameter cylindrical portion 80. Furthermore, a damper 82 that is a circular flange implemented at an axis the same as that of the small diameter cylindrical portion 81 is provided on an outer peripheral portion of a front end portion of the small diameter cylindrical portion 81. The outer diameter of the damper 82 is greater than that of the small diameter cylindrical portion 81 and is smaller than that of the large diameter cylindrical portion 80. Furthermore, the curvature of the outer peripheral surface of the damper 82 is approximately the same as the curvature of inner surfaces (opposing surfaces of both) of the first suppressing portion 59 and the second suppressing portion 68.

Furthermore, the lower cap 79 includes a supported portion 83 and a supported portion 84 positioned between the large diameter cylindrical portion 80 and the small diameter cylindrical portion 81. The supported portion 83 and the supported portion 84 are circular flanges that are in an axis the same as that of the large diameter cylindrical portion 80 and the small diameter cylindrical portion 81. The outer diameters of the supported portion 83 and the supported portion 84 are the same as or greater than the outer diameter of the large diameter cylindrical portion 80. Furthermore, as illustrated in Fig. 7, a distance between a surface of a large diameter cylindrical portion 80 side of the supported portion 83 and a surface of a small diameter cylindrical portion 81 side of the supported portion 84 is slightly shorter than that of W.

The inner cable 87 which is an elongated member made of a metal illustrated in Fig. 3 to Fig. 9 has the flexibility. The total length of the inner cable 87 is longer than that of an integral body of the outer tube 76, the upper cap 77, and the lower cap 79.

The inner cable 87 penetrates inside the outer tube 76, the upper cap 77, and the lower cap 79. Furthermore, the inner cable 87 can be relatively moved with respect to the outer tube 76, the upper cap 77, and the lower cap 79 in an axial direction of itself. Furthermore, the locking portion 88 and the locking portion 89 are fixed to both end portions of the inner cable 87, respectively.

As illustrated in Fig. 4 and Fig. 5, an upper end portion of the cable unit 75 is connected to the lock unit 21.

That is, the upper cap 77 is positioned inside the lock housing 22 and fixed to the lock housing 22. Furthermore, an upper end portion of the inner cable 87 and the locking portion 88 which are positioned at an outer side of the upper cap 77 are positioned inside the lock housing 22, and the locking portion 88 is fixed to the cable locking hole 36 of the forcibly rotating member 34. That is, an upper end portion of the inner cable 87 is connected to the forcibly rotating member 34 through the locking portion 88.

Meanwhile, as illustrated in Fig. 6 to Fig. 9, a lower end portion of the cable unit 75 is connected to the actuator unit 40.

The lower cap 79 of the cable unit 75 is connected to the first bracket 53 and the second bracket 63.

In order to connect the lower cap 79 to the first bracket 53 and the second bracket 63, in a state where the second bracket 63 is separated from the first bracket 53 first, parts of the supported portion 83 and the supported portion 84 are fitted into the support hole 57 of the first bracket 53. Then, the second bracket 63 is brought closer to the first bracket 53 from the vehicle outer side, and thus fitted into another portion (portion opposite to portion fitted in support hole 57) of the supported portion 83 and the supported portion 84 into the support hole 66. Furthermore, a lower end fixing portion 91 formed in a lower end portion of the connection member 90 which is an elongated member made of a metal is brought into contact with the fixing portion 60 of the first bracket 53 from the vehicle inner side and a vehicle inner side surface of the lower end fixing portion 91 is brought into contact with a vehicle outer side surface of the inner panel 14. A bolt 96 passing through the bolt insertion hole 65 of the second bracket 63, the bolt insertion hole 61 of the first bracket 53, and a bolt insertion hole 92 formed in the lower end fixing portion 91 from the vehicle outer side is screwed into a female screw hole (not shown) formed in the inner panel 14. Then, in a state where the fixed portion 64 of the second bracket 63 is in contact with the fixing portion 60 of the first bracket 53, the first bracket 53, the second bracket 63, the connection member 90, and the inner panel 14 are fixed to each other.

Furthermore, when the first bracket 53, the second bracket 63, the connection member 90, and the inner panel 14 are fixed to each other, as illustrated in Fig. 7 to Fig. 9, the large diameter cylindrical portion 80 of the lower cap 79 is in contact with inner surfaces (opposing surfaces of both) of the first clamping portion 58 and the second clamping portion 67, and the damper 82 is in contact with inner surfaces (opposing surfaces of both) of the first suppressing portion 59 and the second suppressing portion 68. In other words, the large diameter cylindrical portion 80 of the lower cap 79 is clamped by the first clamping portion 58 and the second clamping portion 67 and the damper 82 is clamped by the first suppressing portion 59 and the second suppressing portion 68.

Furthermore, as illustrated in Fig. 3, the locking portion 89 fixed to a lower end portion of the inner cable 87 is fixed to a cable locking hole 45 of the rotary lever 44. That is, a lower end portion of the inner cable 87 is connected to the rotary lever 44 through the locking portion 89.

As illustrated in Fig. 6, an upper end fixing portion 93 is formed on an upper portion of the connection member 90 and a bolt insertion hole 94 is formed in the upper end fixing portion 93.

Although not shown, the upper end fixing portion 93 is in contact with a rear end surface of the lock housing 22. A bolt (not shown) penetrating the bolt insertion hole 94 from the rear is screwed into a female screw hole (not shown) formed in a rear end surface of the lock housing 22 such that the upper end fixing portion 93 is fixed to the lock housing 22. That is, the lock unit 21 and the actuator unit 40 are connected to each other by the connection member 90.

Furthermore, as illustrated in Fig. 3, an intermediate portion of the cable unit 75 and an intermediate portion of a cable other than the cable unit 75 that is a component of the closure device 20 are fixed at approximately a central portion of the connection member 90 by a banding band 97.

Furthermore, the latch position detecting means of the lock unit 21 and the motor 46 of the actuator unit 40 are connected to an electronic control unit (ECU not shown) that is a control device provided in the vehicle body through a cable (not shown). Furthermore, the ECU is connected to a battery (not shown) provided in the vehicle body.

Subsequently, an operation of the door apparatus for a vehicle 10 having the above configuration will be described.

If the door apparatus for a vehicle 10 rotates in a direction from the fully opened position to the fully closed position, when the door apparatus for a vehicle 10 reaches a position near the fully closed position, the latch 24 which has positioned at the unlatch position rotates to the half-latch position and the pole 31 positioned at the engagement position is engaged with the engagement projection portion at half latch 27 of the latch 24 while engaging with the striker 100 (see Fig. 4).

When the latch position detecting means detects that the latch 24 rotates to the half-latch position, the latch position detecting means transmits a detection signal to the ECU. Then, the ECU transmits a forward rotation signal to the motor 46 of the actuator unit 40. Then, the motor 46 forwardly rotates, and the rotational force of the motor 46 is transmitted to the rotary lever 44 through the worm, the gear mechanism, and the rotation shaft 42. For this reason, the rotary lever 44 which has positioned at the initial position illustrated in Fig. 3 and Fig. 6 rotates counterclockwise and is moved to the forced rotation position. Then, since the inner cable 87 is pulled downward, the forcibly rotating member 34 which has positioned at the initial position rotates to the forced rotation position against the biasing force of the return spring (see Fig. 5). Then, since the pressing portion 35 of the forcibly rotating member 34 presses the pressed portion 28 of the latch 24, the latch 24 positioned at the half-latch position is forcibly moved to the full-latch position. Then, since the door apparatus for a vehicle 10 rotates to the fully closed position, the opening portion of the vehicle body is fully closed by the door apparatus for a vehicle 10. Furthermore, since the pole 31 positioned at the engagement position is engaged with the engagement projection portion at full latch 26 of the latch 24 and the latch 24 is held at the full-latch position, the door apparatus for a vehicle 10 is held at the fully closed position.

Furthermore, when the latch position detecting means detects that the latch 24 reaches the full-latch position, the latch position detecting means transmits a detection signal to the ECU.

Then, the ECU transmits a reverse rotation signal to the motor 46. Then, the rotary lever 44 rotates in the clockwise direction by the rotational force of the motor 46 and returns to the initial position. Furthermore, since the forcibly rotating member 34 positioned at the forced rotation position returns to the initial position by the biasing force of the return spring, the pressing portion 35 of the forcibly rotating member 34 is separated from the pressed portion 28 of the latch 24. Furthermore, along with a restoring operation of the rotary lever 44 and the forcibly rotating member 34 to the initial position, the entire inner cable 87 relatively moves upward with respect to the outer tube 76.

Furthermore, in a case where the door apparatus for a vehicle 10 is positioned at the fully closed position, when the outside handle 17 rotates from the initial position to the latch release position while the lock knob 19 is positioned at the unlocked position, a rotational force of the outside handle 17 is transmitted to the lift lever through the linking mechanism. Then, the pole 31 which has positioned at the engagement position rotates to the non-engagement position, and is separated from the engagement projection portion at full latch 26 of the latch 24 positioned at the full-latch position.

Therefore, the latch 24 rotates to the unlocked position by the biasing force of the biasing means to release the striker 100. Therefore, the door apparatus for a vehicle 10 can be rotated to the fully opened position side.

Incidentally, as described above, the lower cap 79 of the cable unit 75 is clamped by the first bracket 53 and the second bracket 63.

However, as described above, a distance between a surface of a large diameter cylindrical portion 80 side of the supported portion 83 in the lower cap 79 and a surface of a small diameter cylindrical portion 81 side of the supported portion 84 is slightly shorter than that of W that is a longitudinal direction dimension of the support hole 57 and the support hole 66. Furthermore, a gap is generated between the supported portion 83 and the supported portion 84, and both end portions of the support hole 57 in a longitudinal direction. Similarly, a gap is generated between the supported portion 83 and the supported portion 84, and both end portions of the support hole 66 in the longitudinal direction.

However, the large diameter cylindrical portion 80 of the lower cap 79 in the embodiment is clamped by the first clamping portion 58 and the second clamping portion 67, and the damper 82 is clamped by the first suppressing portion 59 and the second suppressing portion 68.

Therefore, when a moving force of the inner cable 87 is transmitted to the lower cap 79, shaking in various directions of a portion positioned between the locking portion 89 of the inner cable 87 and the lower cap 79 is suppressed by the large diameter cylindrical portion 80, the first clamping portion 58, the second clamping portion 67, the damper 82, the first suppressing portion 59, and the second suppressing portion 68. That is, the inner cable 87 and components of the actuator unit 40 collide with each other such that there is little possibility that abnormal noise occurs between both or the inner cable 87 and/or the components of the actuator unit 40 are damaged.

In addition, a peripheral portion (for example, first clamping portion 58 and first suppressing portion 59) (supporting portion) of the support hole 57 of the first bracket 53 and a peripheral portion (for example, second clamping portion 67 and second suppressing portion 68) (supporting portion) of the support hole 66 of the second bracket 63 are portions for supporting the lower cap 79 of the cable unit 75. Therefore, in a case where the inner cable 87 is greatly shaken due to the rotational force of the motor 46, a large force is applied to peripheral portions of the support holes 57 and 66 from the lower cap 79. Furthermore, the first bracket 53 in which the support hole 57 is formed is a member for supporting the second bracket 63 in which the support hole 66 is formed. Therefore, in this case, it is necessary to increase mechanical strength of a peripheral portion of the support hole 57 of the first bracket 53.

For example, if a peripheral portion of the support hole 57 is positioned between the female screw hole 54 and the female screw hole 55 which are fixing portions for the housing body 41 of the first bracket 53, the mechanical strength of the peripheral portion of the support hole 57 increases.

In this case, it is necessary to position the female screw hole 55 on a side opposite to the female screw hole 54 by interposing the peripheral portion of the support hole 57. That is, a distance between the female screw hole 54 and the female screw hole 55 increases. In other words, a size of the actuator housing 70 (housing body 41, first bracket 53, second bracket 63, and third bracket 71) increases (in direction of straight line connecting female screw hole 54 and female screw hole 55). As illustrated in Fig. 3, the actuator housing 70 is provided inside the door body 11 in a state where a rear end portion thereof approaches the rear end wall portion 14c1 of the inner panel 14. Therefore, in a case where the size of the actuator housing 70 increases, it is difficult to provide the actuator housing 70 inside the door body 11 so as not to interface with the rear end wall portion 14c1.

On the other hand, in the door apparatus for a vehicle 10 of the present embodiment, when a moving force of the inner cable 87 is transmitted to the lower cap 79, it is suppressed that a portion positioned between the locking portion 89 of the inner cable 87 and the lower cap 79 in various directions is shaken. Therefore, there is no necessity to increase the mechanical strength of the peripheral portion of the support hole 57 of the first bracket 53. Therefore, by positioning the female screw hole 55 between the peripheral portion of the support hole 57 of the first bracket 53 and the female screw hole 54, it is possible to decrease the size of the actuator housing 70.

So far, although an embodiment disclosed here has been described above, the embodiment disclosed here should not be limited to the above embodiment.

For example, it is not necessary for the damper 82 of the lower cap 79 to be an annular member. For example, two protrusions fixed to the small diameter cylindrical portion 81 may be used as the damper 82 so as to be separated from each other by approximately 180° in a circumferential direction of the small diameter cylindrical portion 81.

In addition, the large diameter cylindrical portion 80 of the lower cap 79 may be implemented in a non-contact manner with respect to the second clamping portion 67 of the first clamping portion 58 and the second bracket 63 of the first bracket 53.

The door apparatus for a vehicle 10 may be a swing-type front door.

The embodiment disclosed here may be applied to a cable unit different from the cable unit 75 connected to the closure device 20.

For example, the embodiment disclosed here may be applied to a cable unit including the inner cable 87 of which one end is connected to a movable lever (for example, well known open link in locking device) of the locking device (that is, locking device not provided with member corresponding to forcibly rotating member 34) (driven body) different from the closure device and the actuator is connected to the other end, and a member for supporting a member corresponding to the lower cap 79 of the cable unit.

In addition, the embodiment disclosed here may be applied to a cable unit including the inner cable 87 in which an actuator (for example, motor) for slidingly driving a sliding door (driven body) that is the door apparatus for a vehicle 10 is connected (indirectly through power transmission mechanism) to one end thereof and the other end thereof is connected to the sliding door, and a supporting member for supporting a member corresponding to the lower cap 79 of the cable unit.

The first bracket 53 may be formed so as to position a supporting portion (for example, peripheral portion of support hole 57) between the female screw hole 54 and the female screw hole 55.

The principles, preferred embodiment and mode of operation of the present invention have been described in the foregoing specification; however, the invention which is intended to be protected is not to be construed as limited to the particular embodiments disclosed, i.e. all such variations, changes and equivalents which fall under the scope of the present invention as defined in the appended claims are embraced thereby.

## Claims

1. A door apparatus (10) for a vehicle comprising:
an actuator unit (40) including an actuator (46) that generates a driving force for driving a vehicle door for opening or closing an opening portion formed in a vehicle body by relatively moving to the vehicle body or for driving a driven body that is a locking device which is built in the vehicle door and is configured to hold a state where the vehicle door closes the opening portion, and an actuator housing (70) that accommodates at least a part of the actuator (46); and
a cable unit (75) that, in use, connects the driven body and the actuator unit (40) to each other, and transmits a driving force of the actuator (46) to the driven body,
wherein the cable unit (75) includes
a flexible outer tube (76),
an annular member (79) fixed to one end of the outer tube (76) and including a supported portion (83, 84) which is supported to be relatively movable by a supporting portion (58, 59, 67, 68) of the actuator housing (70) outside the outer tube (76), and
a flexible inner cable (87) that penetrates inside the outer tube (76) and the annular member (79) to be relatively movable, and has one end protruding from the annular member (79) to outside to which the driving force of the actuator (46) is applied and the other end which, in use, is connected to the driven body,
the supporting portion (58, 59, 67, 68) includes a pair of suppressing portions (59, 68) opposed to each other while forming a gap, and
the annular member (79) includes a damper (82) which is positioned between the supported portion (83, 84) and the actuator (46), and is in contact with respective opposing surfaces of the pair of suppressing portions (59, 68).

2. The door apparatus (10) for a vehicle according to claim 1, whe
rein the actuator housing (70) includes
a housing body (41) in which at least a part of the actuator (46) is accommodated,
a first bracket (53) that includes two fixing portions (58, 59) that are fixed to an outer surface of the housing body (41) and separated from each other, the supporting portion (58, 59, 67, 68) that positions the other fixing portion of the two fixing portions (58, 59) between the supporting portion (58, 59, 67, 68) and the one fixing portion of the two fixing portions (58, 59), and the one suppressing portion of the pair of suppressing portions (59, 68), and
a second bracket (63) that is fixed to the first bracket (53) and includes the supporting portion (58, 59, 67, 68) and the other suppressing portion of the pair of suppressing portions (59, 68).

3. The door apparatus (10) for a vehicle according to claim 1 or 2, further comprising the driven body,
wherein the driven body is the locking device including
a latch (24) which is engaged or disengaged with or from a striker (100) provided in the vehicle body, and
a forcibly rotating member (34) that is configured to hold the vehicle door in a state where the opening portion is closed by forcibly rotating the latch (24) engaged with the striker (100) to a full-latch position,
when the latch (24) is positioned at a half-latch position while engaging with the striker (100), the actuator (46) generates a driving force for driving the forcibly rotating member (34), and
the inner cable (87) in which the other end is connected to the forcibly rotating member (34) transmits the driving force generated by the actuator (46) to the forcibly rotating member (34) so as to rotate the latch (24) to the full-latch position.

## Patentansprüche

1. Türgerät (10) für ein Fahrzeug, das Folgendes aufweist:
eine Aktuatoreinheit (40), die einen Aktuator (46), der eine Antriebskraft zum Antreiben einer Fahrzeugtür zum Öffnen oder Schließen eines Öffnungsabschnitts, der in einem Fahrzeugkörper ausgebildet ist, durch relatives Bewegen zu dem Fahrzeug oder zum Antreiben eines angetriebenen Körpers, der eine Arretierungsvorrichtung ist, die in der Fahrzeugtür eingebaut ist und gestaltet ist, um einen Zustand zu halten, in dem die Fahrzeugtür den Öffnungsabschnitt schließt, erzeugt, und ein Aktuatorgehäuse (70) aufweist, das zumindest einen Teil des Aktuators (46) aufnimmt; und
eine Kabeleinheit (75), die bei Verwendung den angetriebenen Körper und die Aktuatoreinheit (40) miteinander verbindet und eine Antriebskraft des Aktuators (46) zu dem angetriebenen Körper überträgt,
wobei die Kabeleinheit (75) Folgendes aufweist:
ein flexibles Außenrohr (76),
ein ringförmiges Bauteil (79), das an einem Ende des Außenrohrs (76) befestigt ist und einen gestützten Abschnitt (83, 84) aufweist, der durch einen Stützabschnitt (58, 59, 67, 68) des Aktuatorgehäuses (70) außerhalb des Außenrohrs (76) gestützt ist, um relativ beweglich zu sein, und
ein flexibles Innenkabel (87), das das Außenrohr (76) und das ringförmige Bauteil (79) im Inneren durchdringt, um relativ beweglich zu sein, und ein Ende, das von dem ringförmigen Bauteil (79) nach außen vorsteht, an dem die Antriebskraft des Aktuators (46) aufgebracht wird, und das andere Ende hat, das bei Verwendung mit dem angetriebenen Körper verbunden ist,
wobei der Stützabschnitt (58, 59, 67, 68) ein Paar Unterbindungsabschnitte (68, 69) aufweist, die zueinander gegenüberliegend sind, während sie einen Zwischenraum ausbilden, und
wobei das ringförmige Bauteil (79) einen Dämpfer (82) aufweist, der zwischen dem gestützten Abschnitt (83, 84) und dem Aktuator (46) positioniert ist, und mit jeweiligen gegenüberliegenden Flächen des Paares Unterbindungsabschnitte (59, 68) in Kontakt ist.

2. Türgerät (10) für ein Fahrzeug nach Anspruch 1,
wobei das Aktuatorgehäuse (70) Folgendes aufweist:
einen Gehäusekörper (41), in dem zumindest ein Teil des Aktuators (46) aufgenommen ist,
eine erste Halterung (53), die zwei Befestigungsabschnitte (58, 59), die an einer Außenfläche des Gehäusekörpers (41) befestigt sind und voneinander getrennt sind, den Stützabschnitt (58, 59, 67, 68), der den anderen Befestigungsabschnitt der zwei Befestigungsabschnitte (58, 59) zwischen dem Stützabschnitt (58, 59, 67, 68) und dem einen Befestigungsabschnitt der zwei Befestigungsabschnitte (58, 59) positioniert, und den einen Unterbindungsabschnitt des Paares Unterbindungsabschnitte (59, 68) aufweist, und
eine zweite Halterung (63), die an der ersten Halterung (53) befestigt ist und den Stützabschnitt (58, 59, 67, 68) und den anderen Unterbindungsabschnitt des Paares Unterbindungsabschnitte (59, 68) aufweist.

3. Türgerät (10) für ein Fahrzeug nach Anspruch 1 oder 2, das des Weiteren den angetriebenen Körper aufweist,
wobei der angetriebene Körper die Arretierungsvorrichtung ist, die Folgendes aufweist:
einen Schnapper (24), der mit einem Bügel (100), der in dem Fahrzeugkörper vorgesehen ist, in Eingriff ist oder von diesem gelöst ist, und
ein Zwangsdrehbauteil (34), das gestaltet ist, um die Fahrzeugtür in einem Zustand zu halten, in dem der Öffnungsabschnitt durch zwangsweises Drehen des Schnappers (24), der mit dem Bügel (100) in Eingriff ist, zu einer vollständigen Schnappposition geschlossen ist,
wenn der Schnapper (24) in einer halben Schnappposition positioniert ist, während er mit dem Bügel (100) in Eingriff ist, der Aktuator (46) eine Antriebskraft zum Antreiben des Zwangsdrehbauteils (34) erzeugt, und
das Innenkabel (87), in dem das andere Ende mit dem Zwangsdrehbauteil (34) verbunden ist, die Antriebskraft, die durch den Aktuator (46) erzeugt wird, zu dem Zwangsdrehbauteil (34) überträgt, um den Schnapper (24) zu der vollständigen Schnappposition zu drehen.

## Revendications

1. Appareil de porte (10) pour un véhicule comprenant :
une unité d'actionneur (40) comprenant un actionneur (46) qui génère une force d'entraînement pour entraîner une porte de véhicule pour ouvrir ou fermer une partie d'ouverture formée dans un corps de véhicule en déplaçant relativement le corps de véhicule ou pour entraîner un corps entraîné qui est un dispositif de verrouillage qui est intégré dans la porte de véhicule et est configuré pour maintenir un état dans lequel la porte de véhicule ferme la partie d'ouverture, et un boîtier d'actionneur (70) qui loge au moins une partie de l'actionneur (46) ; et
une unité de câble (75) qui, à l'usage, raccorde le corps entraîné et l'unité d'actionneur (40) l'un à l'autre et transmet une force d'entraînement de l'actionneur (46) au corps entraîné,
dans lequel l'unité de câble (75) comprend :
un tube externe flexible (76),
un élément annulaire (79) fixé sur une extrémité du tube externe (76) et comprenant une partie supportée (83, 84) qui est supportée pour être relativement mobile grâce à une partie de support (58, 59, 67, 68) du boîtier d'actionneur (70) à l'extérieur du tube externe (76), et
un câble interne flexible (87) qui pénètre à l'intérieur du tube externe (76) et de l'élément annulaire (79) pour être relativement mobile, et a une extrémité faisant saillie de l'élément annulaire (79) jusqu'à l'extérieur duquel la force d'entraînement de l'actionneur (46) est appliquée et dont l'autre extrémité, à l'usage, est raccordée au corps entraîné,
la partie de support (58, 59, 67, 68) comprend une paire de parties de suppression (59, 68) opposées entre elles tout en formant un espace, et
l'élément annulaire (79) comprend un amortisseur (82) qui est positionné entre la partie supportée (83, 84) et l'actionneur (46), et est en contact avec des surfaces opposées respectives de la paire de parties de suppression (59, 68).

2. Appareil de porte (10) pour un véhicule selon la revendication 1, dans lequel le boîtier d'actionneur (70) comprend :
un corps de boîtier (41) dans lequel au moins une partie de l'actionneur (46) est logée,
une première console (53) qui comprend deux parties de fixation (58, 59) qui sont fixées sur une surface externe du corps de boîtier (41) et séparées l'une de l'autre, la partie de support (58, 59, 67, 68) qui positionne l'autre partie de fixation des deux parties de fixation (58, 59) entre la partie de support (58, 59, 67, 68) et la une partie de fixation des deux parties de fixation (58, 59), et la une partie de suppression de la paire de parties de suppression (59, 68), et
une seconde console (63) qui est fixée sur la première console (53) et comprend la partie de support (58, 59, 67, 68) et l'autre partie de suppression de la paire de parties de suppression (59, 68).

3. Appareil de porte (10) pour un véhicule selon la revendication 1 ou 2, comprenant en outre le corps entraîné,
dans lequel le corps entraîné est un dispositif de verrouillage comprenant :
un verrou (24) qui est mis en prise ou dégagé avec ou d'un percuteur (100) prévu dans le corps de véhicule, et
un élément de rotation de force (34) qui est configuré pour maintenir la porte de véhicule dans un état dans lequel la partie d'ouverture est fermée en faisant tourner de force le verrou (24) mis en prise avec le percuteur (100) dans une position complètement verrouillée,
lorsque le verrou (24) est positionné dans une position à demi verrouillée tout en ce mettant en prise avec le percuteur (100), l'actionneur (46) génère une force d'entraînement pour entraîner l'élément de rotation de force (34), et
le câble interne (87) dans lequel l'autre extrémité est raccordée à l'élément de rotation de force (34) transmet la force d'entraînement générée par l'actionneur (46) à l'élément de rotation de force (34) afin de faire tourner le verrou (24) dans la position complètement verrouillée.
